(19) Europäisches Patentamt
European Patent Office
Office européen des brevets

(11) **EP 3 125 017 A1**

(12) **EUROPEAN PATENT APPLICATION**
published in accordance with Art. 153(4) EPC

(43) Date of publication:
**01.02.2017 Bulletin 2017/05**

(21) Application number: **15768794.8**

(22) Date of filing: **12.03.2015**

(51) Int Cl.:
*G02B 27/22* (2006.01)     *B60J 1/02* (2006.01)
*B60K 35/00* (2006.01)     *G02B 27/01* (2006.01)
*H04N 13/04* (2006.01)

(86) International application number:
**PCT/JP2015/001379**

(87) International publication number:
**WO 2015/146042 (01.10.2015 Gazette 2015/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **28.03.2014   JP 2014068186
15.01.2015   JP 2015005997**

(71) Applicant: **Panasonic Intellectual Property
Management Co., Ltd.
Osaka-shi, Osaka 570-6207 (JP)**

(72) Inventors:
• **ICHIHASHI, Kouki
Osaka 540-6207 (JP)**
• **HAYASHI, Katsuhiko
Osaka 540-6207 (JP)**
• **OTAKE, Kotaro
Osaka 540-6207 (JP)**

(74) Representative: **Grünecker Patent- und
Rechtsanwälte
PartG mbB
Leopoldstraße 4
80802 München (DE)**

(54) **IMAGE DISPLAY APPARATUS**

(57)     An image display apparatus includes a display device, a parallax barrier, and a controller. The display device displays an image for right-eye and an image for left-eye, with the images having a parallax amount between them. The parallax barrier directs, toward a right eye and a left eye, light of the images which are output from the display device. The controller controls the display device such that the display device continuously varies the parallax amount and the luminance of the displayed images and switches between a mode of showing the images to the both eyes and a mode of showing the corresponding image to any one of the eyes.

FIG. 1

**Description**

TECHNICAL FIELD

The present disclosure relates to image display apparatuses which provide parallax images by using flat panel display devices.

BACKGROUND ART

PTL 1 discloses a display apparatus mounted in a movable body, with the apparatus configuring a head-up display that utilizes a windshield of the body as a projection plate. The display apparatus includes a luminous flux generator, a reflector, a projection unit, and an orientation controller. The luminous flux generator generates luminous flux that contains image information. The reflector reflects the luminous flux generated by the luminous flux generator. The projection unit projects the luminous flux into either both left and right eyes or one of them. The orientation controller emits the luminous flux to a predetermined display region. This configuration allows switching between a both-eyes mode and a single-eye mode in the head-up display.

Citation List

Patent Literature

PTL 1: Unexamined Japanese Patent Publication No. 2010-72596

SUMMARY OF THE INVENTION

An image display apparatus according to the present disclosure includes a display unit, an optical element, and a controller. The display unit outputs an image for right-eye and an image for left-eye, with the images having an amount of parallax between them. The optical element directs light, which has been output from the display unit, toward a right eye and a left eye of the viewer. The controller varies the parallax amount and the luminance of any one of the image for right-eye and the image for left-eye. The controller is capable of switching between a first mode of showing the images having the parallax amount therebetween to the viewer and a second mode of showing the corresponding image to any one of the eyes of the viewer. When switching from the first mode to the second mode, the controller gradually decreases the luminance of any one of the images for right-eye and for left-eye. When switching from the second mode to the first mode, the controller gradually increases the luminance that has been decreased.

BRIEF DESCRIPTION OF DRAWINGS

FIG. 1 is a schematic view of a configuration of a stereoscopic image display apparatus according to a first and a second embodiment;
FIG. 2 is a schematic view illustrating a display device according to the first and the second embodiment;
FIG. 3 is a schematic view illustrating a positional relation among positions of viewpoints, virtual images, and a stereoscopic vision image, according to the first and the second embodiment;
FIG. 4 is a graph showing a variation in luminance according to the first embodiment, and variations in luminance and in amount of parallax according to the second embodiment; and
FIG. 5 is a schematic view of a configuration of a vehicle which is equipped with the stereoscopic image display apparatus according to the present disclosure.

DESCRIPTION OF EXEMPLARY EMBODIMENTS

Hereinafter, detailed descriptions of embodiments will be made with reference to the accompanying drawings as deemed appropriate. However, descriptions in more detail than necessary will sometimes be omitted. For example, detailed descriptions of well-known items and duplicate descriptions of substantially the same configuration will sometimes be omitted, for the sake of brevity and easy understanding by those skilled in the art.
It is noted that the accompanying drawings and the following descriptions are provided to facilitate fully understanding of the present disclosure by those skilled in the art, and are not intended to impose any limitation on the subject matter described in the appended claims.

(FIRST EXEMPLARY EMBODIMENT)

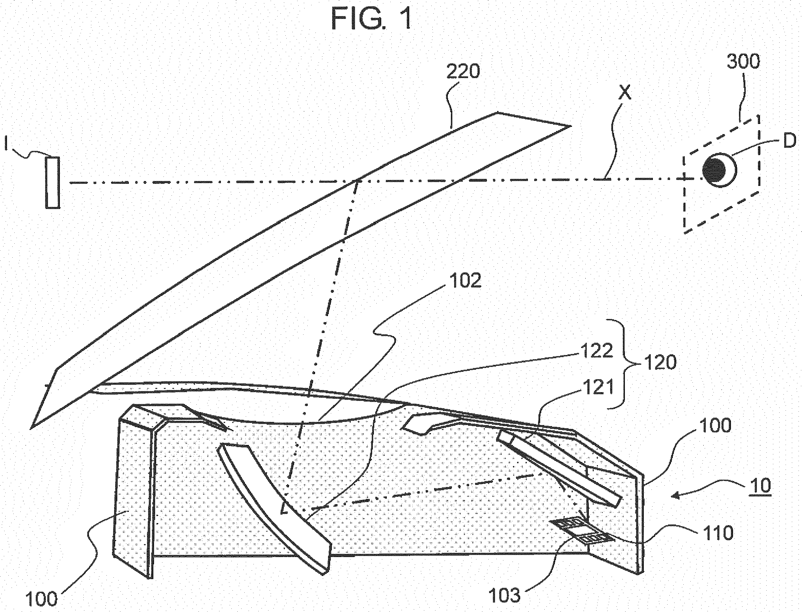

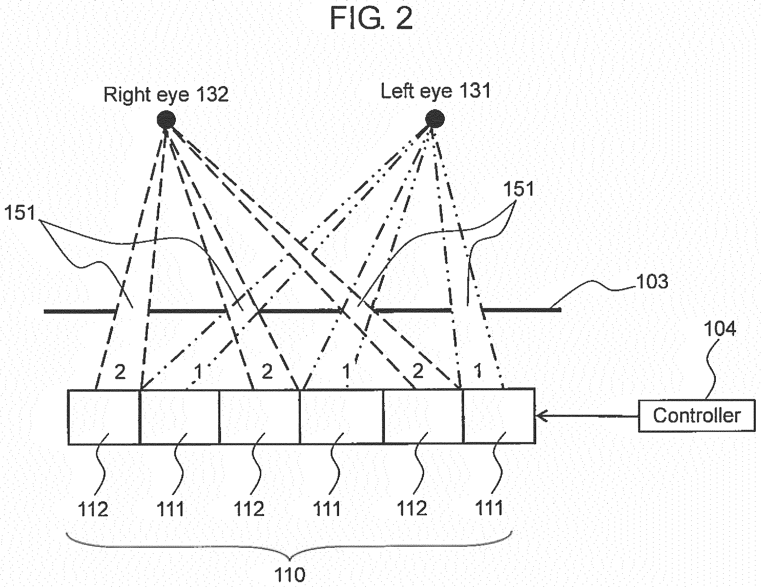

Hereinafter, a first embodiment will be described with reference to FIGS. 1 and 2.

[1-1. Configuration of Head-up Display System]

FIG. 1 shows a configuration of image display apparatus 10 according to the first embodiment. Image display apparatus 10 includes housing 100, display device 110, parallax barrier 103, optical system 120, and controller 104 such as a microcomputer. Display device 110, parallax barrier 103, optical system 120, and controller 104 are disposed inside housing 100. Image display apparatus 10 is disposed in the inside of the dashboard of a vehicle, for example. Display device 110 disposed inside housing 100 provides, via windshield 220, an image for viewer D present in the cabin of the vehicle, with the image being as virtual image I. Housing 100 includes opening 102 through which the image is projected. Opening 102 may be equipped with a transparent cover. Optical system 120 includes first mirror 121 and second mirror 122. Controller 104 controls both luminance of the image which is output from display device 110 and the amount of parallax between an image for left-eye and an image for right-eye.

In the first embodiment, the image displayed by display device 110 is reflected by first mirror 121, second mirror 122, and windshield 220 in this order, and then travels along optical path X to viewing region 300 of viewer D. Viewer D visually recognizes the image, as virtual image I, which is displayed by display device 110.

Display device 110 may employ a liquid crystal display device, an organic light emitting diode, a plasma display panel, or the like. In the first embodiment, first mirror 121 is disposed above display device 110 in the vertical direction. The reflection plane of first mirror 121 is arranged to face the second mirror.

FIG. 2 is a view of the configuration including display device 110 and parallax barrier 103. Parallax barrier 103 is configured by depositing a light shielding material such as chromium, for example, onto a glass substrate (not shown). Parallax barrier 103 is formed in a one-dimensional striped pattern on the glass substrate. Apertures 151 are formed as portions on which the light shielding material has not been deposited.

Display device 110 includes pixels each of which is configured with sub-pixels, i.e. a R(red), a G(green), and a B(blue) sub-pixel. In the first embodiment, these pixels are assigned to pixels 111 for left-eye and pixels 112 for right-eye, in an alternating manner.

Parallax barrier 103 includes apertures 151. These apertures 151 control the orientation of light emitted from display device 110 such that the light emitted from the pixels 111 for left-eye reaches left eye 131 of the viewer while the light emitted from pixels 112 for right-eye reaches right eye 132 of the viewer. This configuration can provide an image having parallax for viewer D.

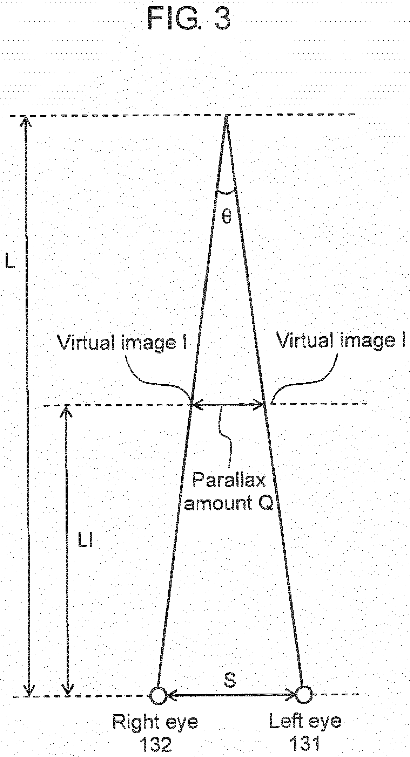

FIG. 3 is a view illustrating a positional relation among the positions of the viewpoints (left eye 131 and right eye 132), virtual images I, and a stereoscopic vision image. As shown in FIG. 3, parallax amount Q between the image for left-eye and the image for right-eye is varied to change convergence angle $\theta$ in accordance with parallax amount Q, thereby changing stereoscopic visual range L of virtual images I that are shown to viewer D. Incidentally, parallax amount Q is expressed by Equation (1),

$$Q = \frac{(L - L_I)S}{L}, \qquad\qquad \text{Eq. (1)}$$

where "$L_1$" is the distance from viewer D to virtual images I, and "S" is the space between the left and right eyes of viewer D.

[1-2. Operation]

Hereinafter, descriptions will be made regarding operations of image display apparatus 10 configured as described above.

In the first embodiment, image display apparatus 10 adopts display modes, i.e. a first mode (binocular vision mode) and a second mode (monocular vision mode). The first mode is one in which an image is displayed on both pixels 111 for left-eye and pixels 112 for right-eye. The second mode is one in which an image is displayed only on pixels 111 for left-eye, not on pixels 112 for right-eye, thereby showing the image only for the left eye of viewer D.

Here, factors will be described which allows a person to perceive stereoscopic visual range L. The stereoscopic vision includes binocular stereoscopic vision and monocular stereoscopic vision. The binocular stereoscopic vision is the ability for the person to feel a stereognostic sense by means of the both eyes. On the other hand, the monocular stereoscopic vision is the ability for the person to feel the stereognostic sense by means of either the left or the right eye. In the binocular stereoscopic vision, factors of stereoscopic vision include convergence and parallax. On the other hand, in the monocular stereoscopic vision, factors of stereoscopic vision include: shielding, relative sizes, relative densities, heights in sight, motion parallax, aerial perspective, and focusing by a crystalline lens. The factors of binocular stereoscopic vision offer high contribution rates to the stereoscopic vision in a short visual range; however, their contribution rates decrease as the visual range becomes longer. In contrast, among the factors of monocular stereoscopic vision, shielding, relative sizes, and relative densities offer constant contribution rates independent of the visual range. Moreover, the aerial perspective increases its contribution rate with increasing visual range. As for the heights in sight and the motion parallax, their contribution rates are higher than those of the factors of binocular stereoscopic vision, independently of the stereoscopic visual range. Therefore, when the stereoscopic visual range is long, the factors of monocular stereoscopic vision are dominant in visually recognizing the stereoscopic visual range of an image.

In the embodiment, in cases where the stereoscopic visual range of viewer D is not longer than 50 meters, the first mode is adopted to change the stereoscopic visual range by means of both the factors of binocular stereoscopic vision and the factors of monocular stereoscopic vision. On the other hand, in cases where the stereoscopic visual range is longer than 50 meters, the second mode is adopted to change the stereoscopic visual range by means of only the factors of monocular stereoscopic vision.

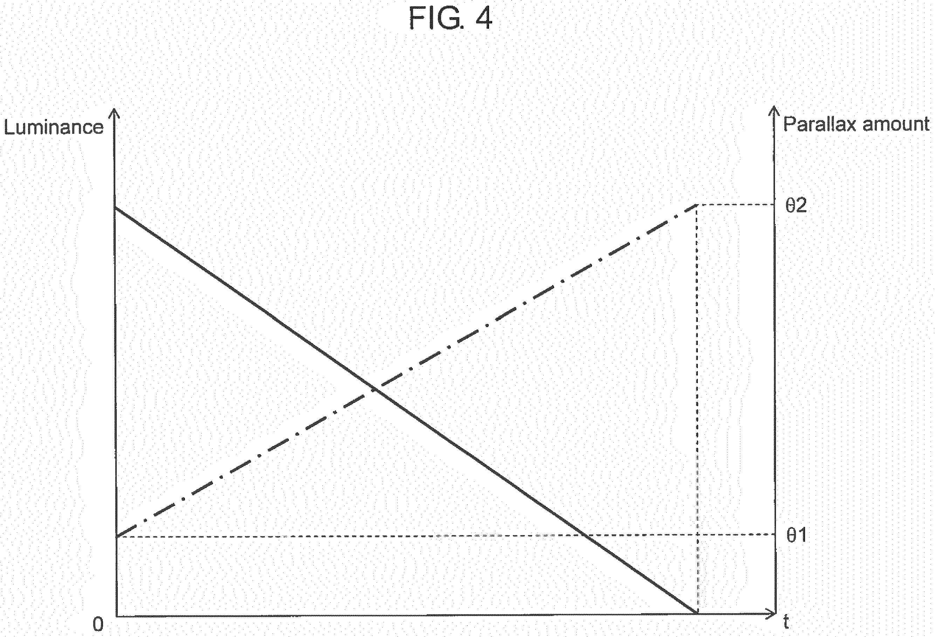

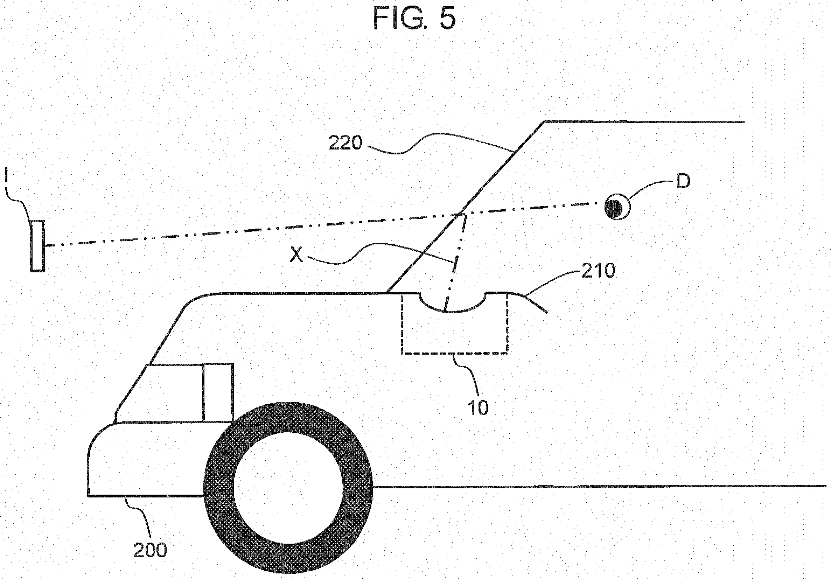

For example, as shown in FIG. 5, a case is considered in which vehicle 200 concerned is running on a road, with the vehicle being equipped with image display apparatus 10 according to the present disclosure. Then, a camera (not shown) mounted on the vehicle detects another vehicle which is running 3 meters forward of viewer D. In response to the thus-detected information, controller 104 controls the display device 110 such that a marker is displayed, in the first mode, at a position where stereoscopic visual range L is 3 meters, with the marker being displayed in so-called augmented reality (AR). If the forward-running vehicle being detected by the vehicle-mounted camera changes its speed so as to become more distant, e.g. not shorter than 50 meters away from the vehicle concerned, controller 104 changes the display mode for the marker by switching from the first mode to the second mode. When switching from the first to the second mode, controller 104 gradually decreases the luminance of pixels 112 for right-eye, as indicated by the solid line in FIG. 4. The luminance of pixels 112 for right-eye finally reaches 0 (zero), which completes the switching over to the second mode.

Moreover, in the case of the marker being displayed at a position where stereoscopic visual range L is not shorter than 50 meters, if the forward-running vehicle being detected by the vehicle-mounted camera changes its speed so as to become closer, i.e. within 50 meters to the vehicle concerned, controller 104 changes the display mode for the marker by switching from the second mode to the first mode. When switching from the second to the first mode, controller 104 gradually increases the luminance of pixels 112 for right-eye. When the luminance of pixels 112 for right-eye is increased to equal that for left-eye, the display mode is completely switched to the first mode.

In switching the display-mode, the method for varying the luminance is not limited to one in which the luminance is varied continuously; the method may be one in which the luminance is varied in a step-by-step manner. Moreover, the rate and the number of steps of varying the luminance are determined in accordance with factors including: the speed and acceleration of the vehicle concerned, the age of the viewer, the kind and position of the subject (e.g. a traffic sign, a forward vehicle, a passerby, etc.) indicated by the marker, and the degree of fatigue of the viewer due to hours of viewer's continuous driving. That is, when the vehicle concerned is running at a high speed, the rate of varying the luminance is made higher. On the contrary, when the vehicle is running at a low speed, the rate of varying the luminance is made lower. For aged viewer D, being expected to have lost the ability to quickly adjust the focus, the rate of varying the luminance is made lower. In contrast, for younger viewer D, the rate of varying the luminance is made higher. In emergency cases where the marker shown by the display apparatus according to the present disclosure indicates a person and/or a vehicle which abruptly comes in front of the vehicle concerned, the luminance is varied rapidly.

[1-3. Advantage and Others]

In the first embodiment, as described above, image display apparatus 10 adopts the first mode when the visual range of viewer D is not longer than 50 meters, and adopts the second mode when the visual range is longer than 50 meters. Then, when the mode is switched, the luminance of pixels 112 for right-eye is continuously gradually varied.

In this way, image display apparatus 10 according to the first embodiment gradually switches between the first mode and the second mode, in accordance with the visual range of viewer D. This configuration allows the switching between the first mode (binocular vision mode) and the second mode (monocular vision mode), without causing viewer D to feel strains and something strange.

(SECOND EXEMPLARY EMBODIMENT)

An image display apparatus according to a second embodiment will be described.

As in the case of the first embodiment, image display apparatus 10 according to the second embodiment adopts the display modes, i.e. the first mode (binocular vision mode) and the second mode (monocular vision mode). The first mode is one in which an image is displayed on both pixels 111 for left-eye and pixels 112 for right-eye. The second mode is one in which an image is displayed only on pixels 111 for left-eye, not on pixels 112 for right-eye, thereby showing the image only to the left eye of viewer D.

In the second embodiment, when the visual range of viewer D is not longer than 50 meters, the first mode is adopted to change stereoscopic visual range L by means of both the factors of binocular stereoscopic vision and the factors of monocular stereoscopic vision, as in the case of the first embodiment. On the other hand, when the visual range is longer than 50 meters, the second mode is adopted to change the stereoscopic visual range by means of only the factors of monocular stereoscopic vision.

For example, a camera (not shown) mounted on the vehicle concerned detects another vehicle which is running 3 meters forward of viewer D. In response to the thus-detected information, controller 104 controls the display device 110 such that a marker is displayed, in the first mode, at a position where stereoscopic visual range L is 3 meters. If the forward-running vehicle being detected by the vehicle-mounted camera changes its speed so as to become more distant, e.g. not shorter than 50 meters away from the vehicle concerned, controller 104 changes the currently-adopted display mode of the marker by switching from the first mode to the second mode.

As in the case of the first embodiment, when the mode is switched from the first mode to the second mode, the luminance of pixels 112 for right-eye is gradually decreased, as indicated by the solid line in FIG. 4. The luminance of pixels 112 for right-eye becomes finally equal to 0 (zero), which completes the switching over to the second mode.

Moreover, in the embodiment, when the mode is switched from the first mode to the second mode, the parallax amount as well is gradually varied simultaneously with the luminance being varied. Specifically, in FIG. 4, let $\theta1$ be the parallax amount of image display apparatus 10 at stereoscopic visual range L of 3 meters. Moreover, let $\theta2$ be the parallax amount in the case where a marker or the like is displayed, in the first mode, at a position with stereoscopic visual range L of 100 meters. In the embodiment, the parallax amount is gradually increased from $\theta1$ to $\theta2$, in the same way for varying the luminance as that in the first embodiment. The relation between the luminance being varied and the parallax amount being varied is controlled such that the timing of decreasing the luminance down to 0 (zero) is coincide with the timing of increasing the parallax amount up to $\theta2$.

On the contrary, when the mode is switched from the second mode to the first mode, the parallax amount is gradually decreased while the luminance of the image for right-eye is gradually increased. Specifically, in FIG. 4, when stereoscopic visual range L is changed from 100 meters to 3 meters, controller 104 gradually decreases the parallax amount from $\theta2$ to $\theta1$. The relation between the luminance being varied and the parallax amount being varied is controlled such that the timing at which the luminance of the image for right-eye becomes equal to that for left-eye is coincide with the timing at which the parallax amount decreases to $\theta1$.

The luminance and parallax amount may be varied continuously or, alternatively, in a step-by-step manner. Moreover, the rate and the number of the steps of varying the luminance and parallax amount are determined in accordance with factors including: the speed of the vehicle concerned, the age of the viewer, the kind and position of the subject (e.g. a traffic sign, a forward vehicle, a passerby, etc.) indicated by the marker, and the degree of fatigue of the viewer due to hours of viewer's continuous driving. Specifically, the luminance and parallax amount are varied at the same rates as those in the first embodiment.

As described above, in the embodiment, image display apparatus 10 adopts the first mode when the visual range of viewer D is not longer than 50 meters, and adopts the second mode when the visual range is longer than 50 meters. When the mode is switched, both the luminance of pixels 112 for right-eye and the parallax amount Q are gradually varied. In the second embodiment, parallax amount Q as well as the luminance is varied when the mode is switched. This configuration allows the smoother switching of the mode without causing the viewer to feel strains and something strange, compared to the case where the luminance alone is varied.

As described in the preceding paragraph, image display apparatus 10 gradually switches between the first mode and the second mode in accordance with stereoscopic visual range L of viewer D. This configuration allows the switching between the first mode (binocular vision mode) and the second mode

(monocular vision mode), without causing viewer D to feel strains and something strange.

(OTHER EXEMPLARY EMBODIMENTS)

As described above, the first and second embodiments have been described to exemplify the technology disclosed in the present application. However, the technology is not limited to these embodiments, and is also applicable to embodiments that are subjected, as appropriate, to various changes and modifications, replacements, additions, omissions, and the like. Moreover, the technology disclosed herein also allows another embodiment which is configured by combining the appropriate constituent elements in the first and second embodiments described above.

Thus, other embodiments will be exemplified hereinafter.

In the first and second embodiments, the descriptions have been made by using the case where the windshield is employed as a means for projecting images thereon. However, it is only required for such an image-projecting means to be capable of showing an image as a virtual image to the viewer. Accordingly, the means may be a combiner instead of the windshield, for example.

Moreover, in the first and second embodiments, the means for displaying stereoscopic images has been described by using the case where the space-sharing display device is used which employs the parallax barriers disposed therein. However, the means for displaying the stereoscopic image is not limited to this configuration and may also be implemented by using a time-sharing display device which displays the image alternately for the left and right eyes.

Furthermore, in the first and second embodiments, the means for providing the left and right eyes with respective parallax images has been exemplified by the parallax barrier; however, such a means may also employ a lenticular lens or a liquid crystal lens, instead of the parallax barrier.

INDUSTRIAL APPLICABILITY

The technology according to the present disclosure is applicable to stereoscopic image display apparatuses which are each mounted on movable bodies and capable of switching between monocular stereoscopic vision and binocular stereoscopic vision, in accordance with images to be displayed, situations of the surroundings of the movable bodies, and viewers of the images. Specifically, the technology according to the disclosure is applicable to a head-up display and the like.

REFERENCE MARKS IN THE DRAWINGS

| | |
|---|---|
| 10 | image display apparatus |
| 100 | housing |
| 102 | opening |
| 103 | parallax barrier |
| 104 | controller |
| 110 | display device |
| 111 | pixels for left-eye |
| 112 | pixels for right-eye |
| 120 | optical system |
| 121 | first mirror |
| 122 | second mirror |
| 131 | left eye |
| 132 | right eye |
| 151 | apertures |
| 200 | vehicle |
| 210 | dashboard |
| 220 | windshield |
| 300 | viewing region |
| D | viewer |
| I | virtual images |
| X | optical path |

**Claims**

1. An image display apparatus for a viewer to visually recognize a virtual image, the apparatus comprising:

a display unit for outputting an image for right-eye and an image for left-eye, the images having a parallax amount therebetween;
an optical element for directing, toward a right eye and a left eye of the viewer, light of the images output from the display unit; and
a controller for varying the parallax amount and luminance of any one of the image for right-eye and the image for left-eye,
wherein the controller is capable of switching between a first mode of showing the images having the parallax amount to the viewer and a second mode of showing the corresponding image to any one of the eyes of the viewer;
when switching from the first mode to the second mode, the controller gradually decreases the luminance of any one of the image for right-eye and the image for left-eye; and
when switching from the second mode to the first mode, the controller gradually increases the luminance having been decreased.

2. The image display apparatus according to claim 1,
wherein, when switching from the first mode to the second mode, the controller gradually increases the parallax amount; and
when switching from the second mode to the first mode, the controller gradually decreases the parallax amount.

3. The image display apparatus according to claim 2, wherein, at a timing of switching from the first mode to the second mode, the controller decreases the luminance of any one of the image for right-eye and the image for left-eye to 0 (zero) and increases the parallax amount to a predetermined parallax amount.

4. The image display apparatus according to claim 2, wherein, at a timing of switching from the second mode to the first mode, the controller causes the images for right-eye and for left-eye to have an identical luminance to each other and decreases the parallax amount to a predetermined parallax amount.

5. The image display apparatus according to any one of claims 1 to 4, wherein the apparatus is disposed in a vehicle.

6. The image display apparatus according to claim 5, wherein the light of the images output from the display unit is projected onto a windshield disposed in the vehicle.

FIG. 1

FIG. 2

# FIG. 3

FIG. 4

FIG. 5

**EP 3 125 017 A1**

## INTERNATIONAL SEARCH REPORT

International application No.

PCT/JP2015/001379

### A. CLASSIFICATION OF SUBJECT MATTER

*G02B27/22*(2006.01)i, *B60J1/02*(2006.01)i, *B60K35/00*(2006.01)i, *G02B27/01* (2006.01)i, *H04N13/04*(2006.01)i

According to International Patent Classification (IPC) or to both national classification and IPC

### B. FIELDS SEARCHED

Minimum documentation searched (classification system followed by classification symbols)
G02B27/22, B60J1/02, B60K35/00, G02B27/01, H04N13/04

Documentation searched other than minimum documentation to the extent that such documents are included in the fields searched
Jitsuyo Shinan Koho 1922–1996 Jitsuyo Shinan Toroku Koho 1996–2015
Kokai Jitsuyo Shinan Koho 1971–2015 Toroku Jitsuyo Shinan Koho 1994–2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-72596 A (Toshiba Corp.), 02 April 2010 (02.04.2010), entire text; all drawings (Family: none) | 1-6 |
| A | JP 2010-76533 A (Toshiba Corp.), 08 April 2010 (08.04.2010), entire text; all drawings & US 2010/0073773 A1 | 1-6 |
| A | JP 2012-47893 A (Toshiba Corp.), 08 March 2012 (08.03.2012), entire text; all drawings (Family: none) | 1-6 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 May 2015 (11.05.15) | 26 May 2015 (26.05.15) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (July 2009)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010072596 A